# EUROPÄISCHE PATENTANMELDUNG

(11) **EP 2 018 948 A1**
(43) Veröffentlichungstag der Anmeldung: **28.01.2009**
(21) Anmeldenummer: 07113299.7
(22) Anmeldetag: 27.07.2007
(51) Int. Cl.: B29C 44/12

(54) **Verfahren zur Herstellung eines Sandwichelements**

(71) Anmelder: Sika Technology AG, 6340 Baar (CH)
(72) Erfinder: Blank, Norman, 8803 Rüschlikon (CH); Finter, Jürgen, 8037 Zürich (CH); Burchardt, Bernd, 8104 Weiningen (CH)
(74) Vertreter: Sika Patent Attorneys

(57) **Zusammenfassung**

Die vorliegende Erfindung betrifft ein Verfahren zur Herstellung eines Sandwichelements (1), welches aufgebaut ist aus einem schäumbaren Material (3) und mindestens einem Faserwerkstoff (2). In einem derartigen Verfahren werden das schäumbare Material und der Faserwerkstoff in einem Werkzeug geschäumt und ausgehärtet.

## Beschreibung

### Technisches Gebiet

Die Erfindung geht aus von einem Verfahren zur Herstellung von hochfesten Sandwichelementen, welche aufgebaut sind aus einem schäumbaren bzw. einem geschäumten Material und mindestens einer Deckschicht eines Faserwerkstoffs nach dem Oberbegriff des ersten Anspruchs.
Weiterhin geht die Erfindung aus von einem Sandwichelement nach dem Oberbegriff weiterer unabhängiger Ansprüche.

### Stand der Technik

Sandwichelemente werden seit geraumer Zeit als Leichtbauteile für unterschiedliche Anwendung eingesetzt und ersetzen oftmals hochfeste Werkstoffe wie metallische Werkstoffe und dergleichen und übertreffen deren Potential sowohl hinsichtlich der Festigkeit und Steifigkeit als auch des Energieaufnahmevermögens und der Dämpfung. Die Eigenschaften solcher Leichtbauteile können dabei über verschiedene Parameter wie beispielsweise der Materialwahl der Deckschichten und des Kernmaterials, der Schichtlage oder der Schichtreihenfolge variiert und den Bedürfnissen angepasst werden. Die Herstellung von Sandwichelementen erfolgt heute grösstenteils durch Verkleben der Schichten aus Kern und Fasermaterial, welche je separat voneinander Hergestellt werden.
Der Nachteil dieses Herstellungsverfahrens und der daraus resultierenden Sandwichelemente ist, dass die Klebefläche zwischen dem Kernmaterial und dem Faserwerkstoff eine Schwachstelle darstellt, welche die mechanischen Eigenschaften des Sandwichelements beeinträchtigt.
Ein weiterer Nachteil dieses Herstellungsverfahrens betrifft insbesondere die Herstellung von Sandwichelementen mit dreidimensionaler Struktur, welche im Hochleistungsbereich eingesetzt werden. Die etablierten Verfahren zur Herstellung von Sandwichelementen wie beispielsweise das Strangziehverfahren (auch Pultrusionsverfahren genannt) oder das Wickelverfahren eignen sich nur für geometrisch einfache Bauteile. Verfahren zur Herstellung von grossen, dreidimensionalen Sandwichelementen, wie sie beispielsweise in der Luftfahrt eingesetzt werden, sind sehr handarbeitsintensiv und dadurch teuer. Der Grund dafür ist, dass auch in diesem Fall zuerst das Kernmaterial hergestellt und geformt werden muss, auf welches dann der Faserwerkstoff aufgeklebt werden muss.
Ein bekanntes Verfahren zur Herstellung von dreidimensionalen Sandwichelementen geht aus von einem so genannten "Sheet Molding Compound". Dabei liegen alle Bestandteile zur Herstellung eines Faserverbundwerkstoffes als teigartige Pressmasse vor, welche dann in einem Fliesspress-Verfahren in die gewünschte Form gebracht wird. Der Vorteil eines solchen Verfahrens ist, dass die Fasern sozusagen im Kernmaterial enthalten sind und keine Faserwerkstoffschichten auf ein Kernmaterial geklebt werden müssen. Jedoch ist der Nachteil eines solchen Verfahrens, dass die belastungsgerechte Ausrichtung der Fasern im Bauteil, nur schwer zu kontrollieren ist und somit die mechanischen Eigenschaften des Bauteils beeinträchtigt werden.

### Darstellung der Erfindung

Der Erfindung liegt die Aufgabe zugrunde ein Verfahren zur Herstellung von hochfesten Sandwichelementen zur Verfügung zu stellen, deren Deckschichten aus Faserwerkstoffen eine gegenüber dem Stand der Technik verbesserte Haftung auf dem Kernmaterial und somit verbesserte mechanische Eigenschaften aufweisen.

Erfindungsgemäss wird dies durch die Merkmale des ersten Anspruchs erreicht.

Kern der Erfindung ist also ein Verfahren zur Herstellung von hochfesten Sandwichelementen umfassend die Schritte
i) Einlegen einer ersten Schicht aus einem Faserwerkstoff in die Kavität des Werkzeugunterteils;
ii) Überdecken der Faserwerkstoffschicht mit einer Schicht eines schäumbaren Materials;
iii) Schliessen des Werkzeugs mit dem Werkzeugoberteil;
iv) Schäumen des schäumbaren Materials;
v) Aushärten des Sandwichelements im Inneren des Werkzeugs;
vi) Öffnen des Werkzeugs und Auswerfen des Sandwichelements.

Die Vorteile der Erfindung liegen unter anderem darin, dass bei Sandwichelementen, welche nach dem erfindungsgemässen Verfahren hergestellt sind, die Deckschichten des Faserwerkstoffs eine deutlich bessere Haftung auf dem Kernmaterial aufweisen und dadurch bessere mechanische Eigenschaften zeigen.
Weiterhin liegt ein Vorteil der Erfindung darin, dass durch die Gestaltung des Werkzeugs, auf einfache weise beliebige dreidimensionale und hochfeste, Sandwichelemente herstellen lassen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Kurze Beschreibung der Zeichnungen

Im Folgenden werden anhand der Zeichnungen Ausführungsbeispiele der Erfindung näher erläutert. Gleiche Elemente sind in den verschiedenen Figuren mit den gleichen Bezugszeichen versehen.

Es zeigen:
- Figur 1: eine schematische Darstellung eines Sandwichelements;
- Figur 2: eine schematische Darstellung eines Sandwichelements mit dreidimensionaler Struktur;
- Figur 3: eine schematische Darstellung eines Sandwichelements mit einem verstärkenden Element;
- Figur 4: eine schematische Darstellung eines erfindungsgemässen Herstellungsverfahrens zur Herstellung von Sandwichelementen;

Es sind nur die für das unmittelbare Verständnis der Erfindung wesentlichen Elemente gezeigt.

### Weg zur Ausführung der Erfindung

Der Begriff "Sandwichelement" steht im vorliegenden Dokument für ein Element, welches aufgebaut ist aus mindestens einer, bevorzugt jedoch zwei dünnen Deckschichten eines steifen Materials, vorzugsweise eines Faserverbundwerkstoffs, welche an ein im Vergleich zur Deckschicht dickes, Kernmaterial angebracht sind. Sandwichelemente können eine beliebige Form und eine beliebige Funktion aufweisen. Das Kernmaterial kann beispielsweise ein geschäumter Kunststoff oder ein leichtes Holz sein. Häufig werden auch wabenförmige Strukturen, besser bekannt als "Honeycomb Composites" aus Kunststoffen oder Leichmetallen, als Kernmaterial verwendet.

Mit "Poly" beginnende Substanznamen wie beispielsweise Polyisocyanat, Polyurethan, Polyester oder Polyol bezeichnen im vorliegenden Dokument Substanzen, die formal zwei oder mehr der in ihrem Namen vorkommenden funktionellen Gruppen pro Molekül enthalten.
Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch so genannte Prepolymere, das heisst reaktive oligomere Voraddukte, deren funktionelle Gruppen am Aufbau von Makromolekülen beteiligt sind.
Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

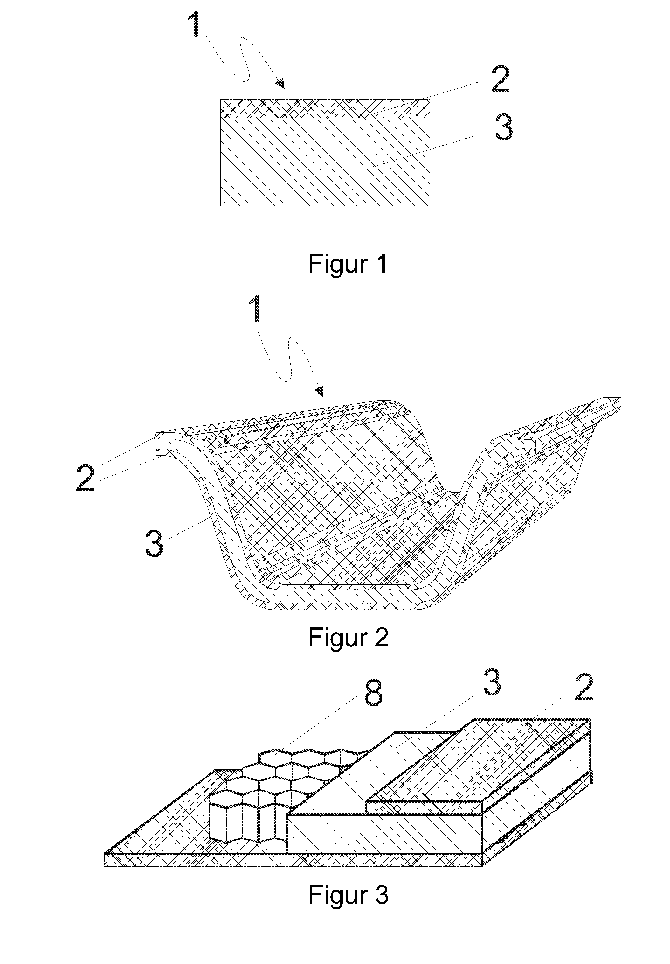

In den Figuren 1 und 2 sind erfindungsgemässe Sandwichelemente 1 schematisch dargestellt, welche aufgebaut sind aus einer (Figur 1) bzw. aus zwei (Figur 2) Deckschichten aus einem Faserwerkstoff 2, und einer Schicht aus einem geschäumten Material 3 in der Mitte. Ein derartiges Sandwichelement wird in einem ersten Verfahren dadurch erhalten, dass das geschäumte Material als schäumbares Material und zusammen mit dem Faserwerkstoff in ein Werkzeug, welches die Negativform des gewünschten Sandwichelements aufweist, gegeben werden und darin geschäumt und ausgehärtet werden. Bevorzugt ist der Faserwerkstoff mit einer härtenden Klebstoffzusammensetzung versehen, welche im Werkzeug aushärtet und neben verbesserten mechanischen Eigenschaften auch einer Verbesserung der Haftung des Faserwerkstoffs an das schäumende Material führt.
Ein weiteres Verfahren, welches geeignet ist um ein derartiges Sandwichelement herzustellen, ist, dass die Schichten aus dem schäumbaren Material und dem gegebenenfalls mit härtender Klebstoffzusammensetzung getränkten Faserwerkstoffen bereits vor dem Einlegen in ein Werkzeug schichtweise aufeinander angeordnet sind und dann in einem Tiefziehverfahren in einem Werkzeug in die gewünschte Form gebracht werden und darin geschäumt und ausgehärtet werden.
Ebenfalls geeignet ist ein Verfahren zu Herstellung derartiger Sandwichelemente, bei welchem der Faserwerkstoff, ohne dass er mit einer härtenden Klebstoffzusammensetzung versehen ist, in das Werkzeugunterteil gelegt wird. Die Schicht aus einem schäumbaren Material, welche auf dem Faserwerkstoff gelegt wird, umgibt beim Schäumen die Fasern und schliesst sie ein, wodurch dien Sandwichelement entsteht, bei welchem das Kernmaterial an seiner Oberfläche auch die Funktion der härtenden Klebstoffzusammensetzung übernimmt.
In Figur 3 ist ein erfindungsgemässes Sandwichelement schematisch dargestellt, welches im Kernmaterial ein zusätzlich verstärkendes Element 8 aufweist. Insbesondere besteht dieses verstärkende Element aus einem temperaturbeständigen Material, bevorzugt aus einem Kunststoff oder aus einem Metall, vorzugsweise aus einem Leichtmetall und weist eine Form mit zugänglichen Hohl- oder Leeräumen, wie beispielsweise ein gitterartige oder eine wabenförmige Struktur ("Honeycomb") auf.
Derartige Sandwichelemente werden dadurch hergestellt, dass nach dem Einlegen des Faserwerkstoffs in das Werkzeugunterteil ein verstärkendes Element auf den Faserwerkstoff gelegt wird. Anschliessend wird es mit dem schäumbaren Material überdeckt, wobei darauf zu achten ist, dass das schäumbare Material bereits im ungeschäumten Zustand in die Hohl- oder Leerräume des verstärkenden Elements eindringt oder gegebenenfalls so angeordnet ist, dass die Hohl- oder Leerräume durch den Schäumungsvorgang ausgeschäumt werden. Durch diese Verfahren kann die Steifigkeit des Sandwichelements weiter erhöht werden.

Der Schäumungsvorgang des schäumbaren Materials und die Aushärtung der härtenden Klebstoffzusammensetzung können unter Druck erfolgen. Dies kann beispielsweise dadurch geschehen, dass das Werkzeug, in dem das Sandwichelement hergestellt wird, luftdicht abgeschlossen ist und durch die Ausdehnung des schäumbaren Materials während der Schäumung ein Druck im Innenraum des Werkzeugs aufgebaut wird. Zusätzlich dazu, oder als Alternative dazu kann der Druck auch dadurch aufgebaut werden, dass das Werkzeugoberteil als Stempel in das Werkzeugunterteil drückt und dadurch das schäumbare Material und das Faserwerkstoff verpresst werden.
Durch die Schäumung und die Aushärtung in einem geschlossenen, dichten Werkzeug, werden die Deckschichten aus Faserwerkstoff mit hoher Kraft an die Werkzeugwand gepresst, was dazu führt, dass das Sandwichelement eine besonders kompakte und steife Struktur erhält. Ebenfalls vorteilhaft an derartigen Herstellungsverfahren ist, dass die Fasern im Sandwichelement sehr präzise und belastungsorientiert ausgerichtet werden können. Dadurch erhalten die erfindungsgemässen Sandwichelemente optimale mechanische Eigenschaften.

Als schäumbares Material 3 kann dabei grundsätzlich jedes beliebige Material eingesetzt werden, das kontrolliert zur Schäumung gebracht werden kann. Bevorzugt weist das schäumbare Material Verstärkungseigenschaften auf, dies muss jedoch nicht zwingend der Fall sein. Typischerweise wird das schäumbare Material thermisch, durch Feuchtigkeit oder durch elektromagnetische Strahlung geschäumt.
Ein solches schäumbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage Schaumstrukturen in Polymeren zu erzeugen.

Bevorzugt wird das schäumbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.

Geeignete Treibmittel sind beispielsweise auch kommerziell erhältlich unter dem Handelsnamen Expancel^{®} von der Firma Akzo Nobel, Niederlande, oder unter dem Handelsnamen Celogen^{®} von der Firma Chemtura Corp., USA.
Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 160 °C, insbesondere von 80 °C bis 150 °C, bevorzugt von 90 °C bis 140 °C, schäumbar.

Als schäumbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Neben Epoxid-Festharzen eignen sich auch kristalline Polyepoxide wie Triglycidylisocyanurate, Terephthalsäurediglycidylether, Gemische aus Terephthalsäurediglycidylether mit Trimellitsäuretriglycidylether , Hydrochinondiglycidylether sowie Addukte aus Trimethylolpropandiglycidylether mit Diisocyanaten wie 4,4'-, 2,4'- und 2,2'-Diphenylmethandiisocyanat (MDI), 2,4-und 2,6-Toluylendiisocyanat (TDI) oder 1-Isocyanato-3,3,5-trimethyl-5-isocyanatomethyl-cyclohexan (IPDI).
Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete schäumbare Materialien sind Treibmittel enthaltende einkomponentige Polyurethanzusammensetzungen aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschreiben sind in EP 0 204 970.

Weiterhin eignen sich als schäumbare Materialien Treibmittel enthaltende zweikomponentige Epoxid/Polyurethan-Zusammensetzungen, wie sie beispielsweise beschrieben sind in WO 2005/080524 A1, dessen Offenbarung hiermit eingeschlossen ist.

Ebenfalls geeignete schäumbare Materialien werden beispielsweise unter dem Handelsnamen SikaBaffle^{®} 240, SikaBaffle^{®} 250 oder SikaBaffle^{®} 255 von der Sika Corp., USA, vertrieben und sind in den Patenten US 5,266,133 und US 5,373,027 beschrieben, deren Offenbarung hiermit eingeschlossen ist.
Als schäumbare Materialien mit Verstärkungseigenschaften sind beispielsweise diejenigen geeignet, welche unter dem Handelsnamen SikaReinforcer^{®} 941 von der Sika Corp., USA, vertrieben werden. Diese sind beschrieben in US 6,387,470, dessen Offenbarung hiermit eingeschlossen ist.

Zur zusätzlichen Verstärkung des Sandwichelements, kann das schäumbare Material zusätzlich lose Fasern aus Faserwerkstoffmaterial enthalten.

Als Faserwerkstoffe eignen sich solche aus hochfesten Fasern wie beispielsweise Glasfasern, Kohlefasern, Metallfasern, insbesondere Stahlfasern, Polymerfasern, insbesondere Aramidfasern, und Keramikfasern, insbesondere Glasfasern und Kohlefasern.
Im Faserwerkstoff können die Fasern dabei unidirektional oder als Gewebe oder Gewirke oder als Multiaxialgelege vorliegen. Bei der unidirektionalen Anordnung sind alle Fasern oder Faserbündel des Faserwerkstoffs in die gleiche Richtung, also parallel ausgerichtet. Beim Gewebe sind die Fasern oder Faserbündel meist als rechtwinkliges Flächengebilde angeordnet. Beim Gewirke sind gleichlaufende Fasern zu Maschen miteinander verschlungen und bei einem Multiaxialgelege liegen die Fasern oder Faserbündel parallel zueinander und in Schichten unterschiedlicher Faserorientierung übereinander angeordnet.

Bevorzugt ist der Faserwerkstoff mit einer härtenden Klebstoffzusammensetzung versehen.

Als härtende Klebstoffzusammensetzungen können verschiedene Systeme zur Anwendung kommen, welche kontrolliert zur Aushärtung gebracht werden können. Dies geschieht vorzugsweise thermisch, durch Feuchtigkeit, elektromagnetische Strahlung oder Partikelstrahlung, insbesondere thermisch.

Als härtende Klebstoffzusammensetzungen eignen sich insbesondere hitzehärtende Klebstoffzusammensetzungen, welche bei einer Temperatur von von ≥ 140 °C, insbesondere von 150 °C bis 220 °C, bevorzugt von 160 °C bis 200 °C, aushärten.

Bevorzugt ist die härtende Klebstoffzusammensetzung eine einkomponentige Epoxidharzzusammensetzung, eine einkomponentige Polyurethanzusammensetzung oder eine einkomponentige Acrylatzusammensetzung.

Meist bevorzugt ist die härtende Klebstoffzusammensetzung eine einkomponentige, hitzehärtende Epoxidharzzusammensetzung umfassend mindestens ein Epoxidharz A und mindestens einen Härter B für Epoxidharze, welcher durch erhöhte Temperatur aktiviert wird.
Das Epoxidharz A, welches durchschnittlich mehr als eine Epoxidgruppe pro Molekül aufweist, ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharz" verwendet. Die Glastemperatur von Festharzen liegt über Raumtemperatur, d.h. sie lassen sich bei Raumtemperatur zu schüttfähigen Pulvern zerkleinern.
Bevorzugte Epoxid-Festharze weisen die Formel (I) auf 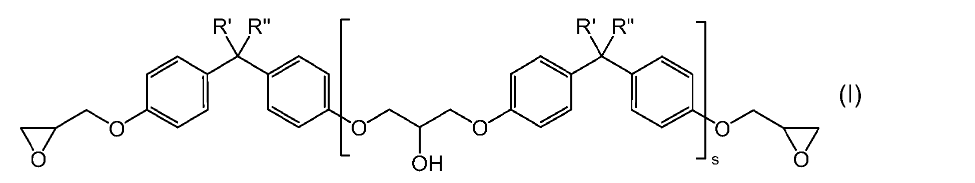 Hierbei stehen die Substituenten R' und R" unabhängig voneinander entweder für H oder CH₃. Weiterhin steht der Index s für einen Wert von ≥ 1.5, insbesondere von 2 bis 12.
Derartige Epoxid-Festharze sind beispielsweise kommerziell erhältlich von The Dow Chemical Company, USA, von Huntsman International LLC, USA, oder von Hexion Specialty Chemicals Inc, USA.

Verbindungen der Formel (I) mit einem Index s zwischen 1 und 1.5 werden vom Fachmann als Semisolid-Epoxidharze bezeichnet. Für die hier vorliegende Erfindung werden sie ebenfalls als Festharze betrachtet. Bevorzugt sind jedoch Epoxid-Festharze im engeren Sinn, d.h. wo der Index s einen Wert von ≥ 1.5 aufweist.

Bevorzugte Epoxid-Flüssigharze weisen die Formel (II) auf 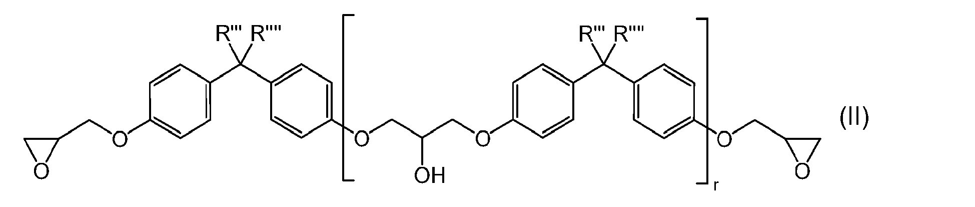 Hierbei stehen die Substituenten R''' und R'''' unabhängig voneinander entweder für H oder CH₃. Weiterhin steht der Index r für einen Wert von 0 bis 1. Bevorzugt steht r für einen Wert von ≤ 0.2.
Es handelt sich somit vorzugsweise um Diglycidylether von Bisphenol-A (DGEBA), von Bisphenol-F sowie von Bisphenol-A/F. Die Bezeichnung "A/F" verweist hierbei auf eine Mischung von Aceton mit Formaldehyd, welche als Edukt bei dessen Herstellung verwendet wird. Solche Flüssigharze sind beispielsweise unter den Handelsnamen Araldite^{®} GY 250, Araldite^{®} PY 304, Araldite^{®} GY 282 von der Firma Huntsman International LLC, USA, oder D.E.R.^{®} 331 oder D.E.R.^{®} 330 von der Firma The Dow Chemical Company, USA, oder unter dem Handelsnamen Epikote^{®} 828 oder Epikote^{®} 862 von der Firma Hexion Specialty Chemicals Inc, USA, kommerziell erhältlich.

Bevorzugt stellt das Epoxidharz **A** ein Epoxid-Flüssigharz der Formel (II) dar. In einer meist bevorzugten Ausführungsform enthält die hitzehärtende Epoxidharzzusammensetzung sowohl mindestens ein Epoxid-Flüssigharz der Formel (II) als auch mindestens ein Epoxid-Festharz der Formel (I).

Der Anteil von Epoxidharzes **A** beträgt vorzugsweise 2 bis 80 Gew.-%, insbesondere 5 bis 70 Gew.-%, bevorzugt 7 bis 60 Gew.-%, bezogen auf das Gesamtgewicht der härtenden Klebstoffzusammensetzung.

Der Härter **B** für Epoxidharze wird durch erhöhte Temperatur aktiviert. Es handelt sich hierbei vorzugsweise um einen Härter, welcher ausgewählt ist aus der Gruppe bestehend aus Dicyandiamid, Guanamine, Guanidine, Aminoguanidine und deren Derivate. Weiterhin möglich sind beschleunigend wirksame Härter, wie substituierte Harnstoffe, wie beispielsweise 3-Chlor-4-Methyl-phenylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Weiterhin können Verbindungen der Klasse der Imidazole und Amin-Komplexe eingesetzt werden.
Bevorzugt handelt es sich beim Härter **B** um einen Härter, welcher ausgewählt ist aus der Gruppe bestehend aus Dicyandiamid, Guanamine, Guanidine, Aminoguanidine und deren Derivate; substituierte Harnstoffe, insbesondere 3-Chlor-4-Methylphenylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff(Diuron), sowie Imidazole und Amin-Komplexe.
Besonders bevorzugt als Härter **B** ist Dicyandiamid.

Der Anteil des Härters **B** beträgt vorzugsweise 0.05 bis 8 Gew.-%, insbesondere 0.1 bis 6 Gew.-%, bevorzugt 0.2 bis 5 Gew.-%, bezogen auf das Gesamtgewicht der härtenden Klebstoffzusammensetzung.
Der Begriff "Härter" schliesst im vorliegenden Dokument auch Katalysatoren und katalytisch wirkende Verbindungen mit ein. Dem Fachmann ist in diesem Fall klar, dass beim Einsatz eines Katalysators oder einer katalytisch wirkenden Verbindung als Härter **B,** der Anteil der Härters **B** am gesamten Schaum im unteren Bereich des angegebenen Wertebereichs liegt.

Ebenfalls geeignet ist die härtende Klebstoffzusammensetzung eine einkomponentige, hitzehärtende Polyurethanzusammensetzung, welche aufgebaut ist aus polymeren Polyolen und Polyisocyanaten.

Geeignete Polyisocyanate sind insbesondere Di- und Triisocyanate. Geeignete Diisocyanate sind aliphatische, cycloaliphatische, aromatische oder arylaliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylen diisocyanat (TMXDI), etc. sowie deren Dimere. Bevorzugt sind HDI, IPDI, MDI oder TDI. Geeignete Triisocyanate sind Trimere oder Biurete von aliphatischen, cycloaliphatischen, aromatischen oder arylaliphatischen Diisocyanaten, insbesondere die Isocyanurate und Biurete der im vorherigen Absatz beschriebenen Diisocyanate. Selbstverständlich können auch geeignete Mischungen von Di- oder Triisocyanate eingesetzt werden.

Als Polyole eignen sich beispielsweise die folgenden handelsüblichen Polyole oder beliebige Mischungen davon:
- Polyoxyalkylenpolyole, auch Polyetherpolyole genannt, welche das Polymerisationsprodukt von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Die Polyoxyalkylendiole können unterschiedliche Ungesättigtheitsgrade (gemessen nach ASTM D-2849-69 und angegeben in Milliäquivalent Ungesättigtheit pro Gramm Polyol (mEq/g)) aufweisen. Jene mit einem niedrigen Ungesättigtheitsgrad werden beispielsweise mit Hilfe von so genannten Double Metal Cyanide Komplex-Katalysatoren (DMC-Katalysatoren) hergestellt, jene mit einem höheren Ungesättigtheitsgrad werden beispielsweise mit Hilfe von anionischen Katalysatoren wie NaOH, KOH, CsOH oder Alkalialkoholaten hergestellt.
   Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 8'000 g/mol. Unter "Molekulargewicht" versteht man im vorliegenden Dokument stets das Molekulargewichtsmittel Mn.
   Ebenfalls besonders geeignet sind so genannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Azelainsäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Polyacrylat- und Polymethacrylatpolyole.
- Polykohlenwasserstoffpolyole, auch Oligohydrocarbonole genannt, wie beispielsweise polyhydroxyfunktionelle Ethylen-Propylen-, Ethylen-Butylen- oder Ethylen-Propylen-Dien-Copolymere, wie sie beispielsweise von der Firma Kraton Polymers hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, wie beispielsweise solche, die durch Copolymerisation von 1,3-Butadien und Allylalkohol hergestellt werden und auch hydriert sein können.
- Polyhydroxyfunktionelle Acrylonitril/Butadien-Copolymere, wie sie beispielsweise aus Epoxiden oder Aminoalkoholen und carboxylterminierten Acrylonitril/Butadien-Copolymeren (kommerziell erhältlich unter dem Namen Hycar^{®} CTBN von Emerald Performance Materials, LLC, USA) hergestellt werden können.

Diese genannten Polyole weisen bevorzugt ein mittleres Molekulargewicht von 250 bis 30'000 g/mol, insbesondere von 1'000 bis 30'000 g/mol, und weisen bevorzugt eine mittlere OH-Funktionalität im Bereich von 1.6 bis 3 auf.

Vorteilhaft sind die Polymere di- oder höherfunktioneller Polyole mit OH-Äquivalentsgewichten von 300 bis 6000 g/OH-Äquivalent, insbesondere von 600 bis 4000 g/OH-Äquivalent, vorzugsweise 700 bis 2200 g/OH-Äquivalent. Weiterhin vorteilhaft sind die Polyole ausgewählt aus der Gruppe bestehend aus Polyethylenglycolen, Polypropylenglycolen, Polyethylenglycol-Polypropylenglycol-Block-Co-polymeren, Polybutylenglycolen, hydroxylterminierten Polybutadienen, hydroxylterminierten Butadien/Acrylnitril-Copolymeren, hydroxylterminierten synthetischen Kautschuken, deren Hydrierungsprodukten und Gemischen dieser genannten Polyole.
Zusätzlich zu diesen genannten Polyolen können niedrigmolekulare zwei- oder mehrwertige Alkohole wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole und andere höherwertige Alkohole, niedrigmolekulare Alkoxylierungsprodukte der vorgenannten zwei- und mehrwertigen Alkohole sowie Mischungen der vorgenannten Alkohole bei der Herstellung des Polyurethanpolymers mitverwendet werden.

Die Polyurethanzusammensetzung enthält weiterhin mindestens einen Härter B', welcher gegenüber Isocyanaten reaktive Gruppen enthält und in blockierter Form vorliegt. Die Blockierung kann dabei chemischer oder physikalischer Natur sein. Beispiele für geeignete chemisch blockierte Härter sind über eine Komplexbindung an Metalle gebundene Polyamine, im Besonderen Komplexverbindungen von Methylendianilin (MDA) und Natriumchlorid. Solche Komplexverbindungen werden üblicherweise mit der Bruttoformel (MDA)₃·NaCl beschrieben. Ein geeigneter Typ ist als Dispersion in Diethylhexylphthalat unter dem Handelsnamen Caytur^{®} 21 von Chemtura Corp., USA, erhältlich. Der Komplex zersetzt sich beim Erwärmen auf 80 bis 160 °C mit bei höherer Temperatur zunehmender Geschwindigkeit, wodurch Methylendianilin als aktiver Härter freigesetzt wird. Beispiele für physikalisch blockierte Härter sind mikroverkapselte Härter. Zur Verwendung als Härter in mikroverkapselter Form insbesondere geeignet sind zwei- oder mehrwertige Alkohole wie 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole, niedrigmolekulare Alkoxylierungsprodukte der vorgenannten zwei- und mehrwertigen Alkohole; kurzkettige Polyesterpolyole wie Terephthalsäurebisglykolester; aliphatische, cycloaliphatische und aromatische Aminoalkohole wie Ethanolamin, Propanolamin, Butanolamin, N-Methylethanolamin, Diethanolamin, Triethanolamin; Hydrazide von Dicarbonsäuren; aliphatische Polyamine wie Ethylendiamin, 1,2- und 1,3-Propandiamin, 2-Methyl-1,2-propandiamin, 2,2-Dimethyl-1,3-propandiamin, 1,3- und 1,4-Butandiamin, 1,3- und 1,5-Pentandiamin, 1,6-Hexamethylendiamin, 2,2,4- und 2,4,4-Trimethylhexamethylendiamin und Mischungen davon, 1,7-Heptandiamin, 1,8-Octandiamin, 4-Aminomethyl-1,8-octandiamin, 1,9-Nonandiamin, 1,10-Decandiamin, 1,11-Undecandiamin, 1,12-Dodecandiamin, Methyl-bis-(3-aminopropyl)amin, 1,5-Diamino-2-methylpentan (MPMD), 1,3-Diaminopentan (DAMP), 2,5-Dimethyl-1,6-hexamethylendiamin, Dimerfettsäurediamine; cycloaliphatische Polyamine wie 1,2-, 1,3- und 1,4-Diaminocyclohexan, Bis-(4-aminocyclohexyl)-methan, Bis-(4-amino-3-methylcyclohexyl)-methan, Bis-(4-amino-3-ethylcyclohexyl)-methan, Bis-(4-amino-3,5-dimethylcyclohexyl)methan, 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 1-Cyclohexyl-amino-3-aminopropan, 2,5(2,6)-Bis-(aminomethyl)-bicyclo[2.2.1]heptan (NBDA, hergestellt von Mitsui Chemicals, Japan), 3(4),8(9)-Bis-(aminomethyl)-tricyclo-[5.2.1.02,6]decan, 1,4-Diamino-2,2,6-trimethylcyclohexan (TMCDA), 3,9-Bis-(3-aminopropyl)-2,4,8,10-tetraoxaspiro[5.5]undecan, 1,3- und 1,4-Xylylendiamin; Ethergruppen-haltige aliphatische Polyamine wie Bis-(2-aminoethyl)ether, 4,7-Dioxadecan-1,10-diamin, 4,9-Dioxadodecan-1,12-diamin und höhere Oligomere davon, Polyoxyalkylen-Polyamine mit theoretisch zwei oder drei Aminogruppen, erhältlich beispielsweise unter dem Namen Jeffamine® (hergestellt von Huntsman International LLC, USA); aromatische Polyamine wie Methylendianilin, Diaminodiphenylether, Diaminodiphenylsulfon, die isomeren Phenylendiamine, Aminodiphenylamin. Bevorzugt sind die genannten aliphatischen, cycloaliphatischen und aromatischen Polyamine. Die Mikroverkapselung dieser Härter kann nach einem der gängigen Verfahren durchgeführt werden, beispielsweise mittels Sprühtrocknung, Grenzflächenpolymerisation, Koazervation, Tauch- oder Zentrifugenverfahren, Wirbelbettverfahren, Vakuum-Verkapselung, elektrostatische Mikroverkapselung. Die so erhaltenen Mikrokapseln haben eine Partikelgrösse von 0.1 bis 100 µm, bevorzugt 0.3 bis 50 µm. Die Grösse der Mikrokapseln ist so bemessen, dass sie sich beim Erhitzen einerseits effektiv öffnen, und andererseits nach der Aushärtung eine optimale Homogenität und damit Kohäsionsfestigkeit des Schaums erhalten wird. Sie dürfen weiterhin keinen schädlichen Einfluss auf die Adhäsionseigenschaften des Schaums ausüben. Als Material für die Kapselhülle kommen Polymere in Betracht, die im zu verkapselnden Härter unlöslich sind und einen Schmelzpunkt von 40 bis 200 °C aufweisen. Beispiele für geeignete Polymere sind KohlenwasserstoffWachse, Polyethylenwachse, Wachsester, Polyester, Polyamide, Polyacrylate, Polymethacrylate oder Mischungen mehrerer solcher Polymeren.

Von den hitzehärtenden Polyurethanzusammensetzungen sind aufgrund der besseren Lagerstabilität auch solche geeignet, welche aufgebaut sind aus polymeren Polyolen wie sie vorhergehend beschrieben wurden und verkapselten oder oberflächendeaktivierten Isocyanaten. Verkapselte oder oberflächendeaktivierte Polyisocyanate sind dem Fachmann bekannt und beispielsweise beschreiben in EP 0 204 970 oder in EP 0 922 720 A1, deren Offenbarung hiermit eingeschlossen ist. Als Isocyanate eignen sich dabei die vorhergehend beschriebenen.

Weiterhin kann die härtende Klebstoffzusammensetzung eine einkomponentige, hitzehärtende Acrylatzusammensetzung sein. Diese umfasst vorzugsweise mindestens ein zwei- oder mehrwertiges Acryl- oder Methacrylgruppen enthaltendes Monomer sowie mindestens ein monofunktionelles Acryl- oder Methacrylgruppen enthaltendes Monomer. Beispiele für geeignete zwei- oder mehrwertige Acryl- oder Methacrylgruppen enthaltende Monomere sind Acrylate und Methacrylate von aliphatischen Polyetherpolyurethanen und Polyesterpolyurethanen, Polyethern, Polyestern, Novolaken, zwei- und mehrwertigen aliphatischen, cycloaliphatischen und aromatischen Alkoholen, Glykolen und Phenolen. Beispiele für monofunktionelle Acryl- oder Methacrylgruppen enthaltende Monomere sind Methylacrylat und -methacrylat, Ethylacrylat und -methacrylat, Hexylacrylat und -methacrylat, Dodecylacrylat und -methacrylat, Tetrahydrofurfurylacrylat und -methacrylat, sowie hydroxylgruppenhaltige Acrylate und Methacrylate wie 2-Hydroxyethylacrylat und -methacrylat und 2-Hydroxypropylacrylat und -methacrylat.
Als Härter **B**" enthält die Acrylatzusammensetzung einen thermischen Initiator in blockierter Form, welcher die Polymerisation der Acrylat- oder Methacrylatmonomere auslöst. Beispiele für geeignete thermische Initiatoren sind Azobisisobutyronitrlil (AIBN); Diacylperoxide wie Benzoylperoxid, Lauroylperoxid, und Decanoylperoxid; Peroxydicarbonate wie Dipropylperoxydicarbonat; Peroxyoxalate wie Di-*tert*-butylperoxyoxalat; Hyponitrite wie Di-*tert*-butylhyponitrit. Bevorzugt sind AIBN und Benzoylperoxid. Der blockierte thermische Initiator, insbesondere AIBN und Benzoylperoxid, liegt bevorzugt in mikroverkapselter Form vor. Die Herstellung von mikroverkapselten organischen Peroxiden wird beispielsweise beschrieben in EP 0 730 493 B1.

Die härtende Klebstoffzusammensetzung härtet vorzugsweise bei einer Temperatur von ≥ 140 °C, insbesondere von 150 °C bis 220 °C, bevorzugt von 160 °C bis 200 °C, aus. Das heisst, dass bei dieser Temperatur der Härter **B**, der Härter **B**' bzw. der Härter **B**" aktiviert wird oder für den Fall, dass verkapselte Isocyanate oder Härter eingesetzt werden, dass bei dieser Temperatur die verkapselte Komponente freigesetzt wird.

Ein wesentlicher Punkt der hier vorliegenden Erfindung ist, dass die Schäumung des schäumbaren Materials vor der Aushärtung der Klebstoffzusammensetzung, ausgeführt werden kann. Der Grund dafür ist, dass die Aushärtung der Klebstoffzusammensetzung erst erfolgen soll, wenn die Schäumung des schäumbaren Materials grösstenteils stattgefunden hat und die Deckschichten aus Faserwerkstoff an die Werkzeugwand gepresst worden sind.
Andernfalls härtet die Klebstoffzusammensetzung aus, bevor sie durch die Schäumung den vorgesehenen Platz erreicht hat.
Für die bevorzugte Ausführungsform der Erfindung, bei welcher das schäumbare Material thermisch geschäumt wird und die härtende Klebstoffzusammensetzung hitzehärtend ist, bedeutet das, dass die Aushärtungstemperatur der Klebstoffzusammensetzung oberhalb der Schäumungstemperatur des schäumbaren Materials liegen muss.

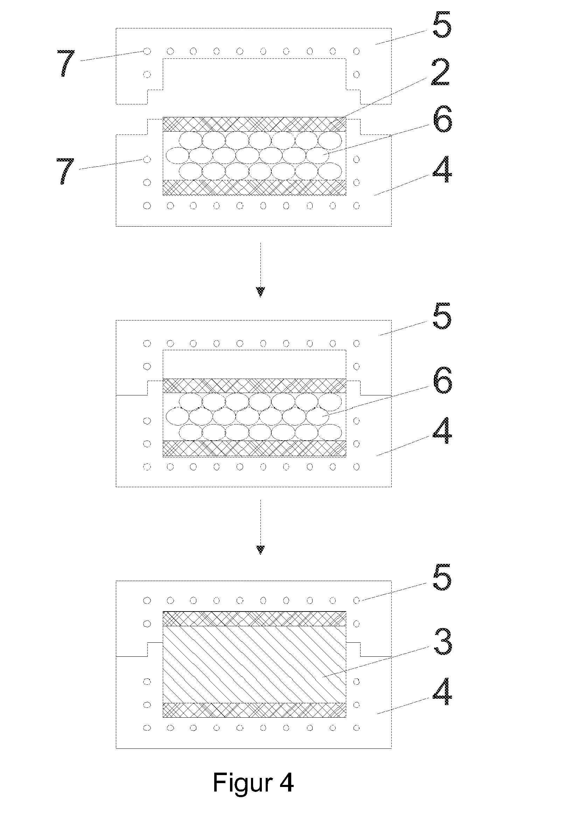

In Figur 4 ist ein erfindungsgemässes Verfahren zur Herstellung von Sandwichelementen, wie sie vorhergehen beschrieben sind, schematisch dargestellt.
Dabei wird in einem ersten Schritt i) eine Schicht eines Faserwerkstoffs, welcher mit einer hitzehärtenden Klebstoffzusammensetzung versehen ist in die Kavität eines Werkzeugunterteils 4 gelegt. Dabei ist darauf zu achten, dass die Fasern des Faserwerkstoffs belastungsgerecht, entsprechend der Hauptspannungstrajektorien im Leichtbauteil ausgerichtet sind. Diese Schicht eines Faserwerkstoffs wird in einem Schritt ii) mit einer Schicht eines schäumbaren Materials überdeckt. Das schäumbare Material kann dabei als Granulat, als Griess, als Pulver, als Schichtkörper, als Paste oder als hochviskose Flüssigkeit in das Werkzeugunterteil gegeben werden. Über die Schicht des schäumbaren Materials wird eine zweite Schicht eines Faserwerkstoffs, welcher mit einer hitzehärtenden Klebstoffzusammensetzung versehen ist, gelegt und das Werkzeug wird in einem Schritt iii) mit dem Werkzeugoberteil 5 geschlossen. Anschliessend wird das Werkzeug aufgeheizt. Dies geschieht vorzugsweise durch Heizelemente 5, welche im Werkzeug angeordnet sind, kann aber auch beispielsweise durch das Umlüften des Werkzeuginnenraums mit einem erhitzten Gas, insbesondere Luft, oder durch Induktion erfolgen. Durch die Einwirkung der Temperatur schäumt das schäumbare Material in einem Schritt iv) auf und presst die Deckschichten des Faserwerkstoffs an die Werkzeuginnenwände, wodurch das Sandwichelement die vorgesehene Form einnimmt. Durch weitere Einwirkung von Temperatur wird wir das Sandwichelement in einem Schritt v) ausgehärtet. Der Vorteil dieses Herstellungsverfahrens liegt insbesondere darin, dass sich das schäumbare Material mit der härtenden Klebstoffzusammensetzung verbindet und somit der Faserwerkstoff fest am Kernmaterial Haftet. Zuletzt wird in einem Schritt vi) das Werkzeug geöffnet und das fertige Sandwichelement wird dem Werkzeug ausgeworfen.

In einem bevorzugten Verfahren umfasst der Schritt iv) das Erhöhen der Temperatur, insbesondere auf eine Temperatur von 80 - 150°C, bevorzugt von 90 - 140 °C und der Schritt v) das weitere Erhöhen der Temperatur, insbesondere auf eine Temperatur von 120 bis 180 °C, bevorzugt von 130 bis 170 °C. In Fall eines solchen bevorzugten Verfahrens schliesst sich an Schritt vi) ein Schritt des Abkühlen des Werkzeugs auf Raumtemperatur an.

Vorzugsweise wird das Werkzeug in einem derartigen Verfahren mit einer Beschichtung oder mit einem Trennmittel versehen, die verhindert, dass die Deckschichten aus Faserwerkstoff, welcher mit einer härtenden Klebstoffzusammensetzung versehen ist, am Werkzeug haften. Derartige Beschichtungen sind beispielsweise Folien aus Polyethylen, Polypropylen Polytetrafluorethylen und dergleichen. Als Trennmittel werden beispielsweise Teflonsprays, Silikonsprays und dergleichen eingesetzt.

Weiterhin umfasst die Erfindung ein Sandwichelement, welches nach einem vorhergehend beschriebenen Verfahren hergestellt wird.

Weiterhin umfasst die Erfindung die Verwendung eines Sandwichelements, welches nach einem vorhergehend beschriebenen Verfahren hergestellt wird als strukturelles Leichtbauteil. Vorzugsweise werden derartige strukturelles Leichtbauteile für den Bau von Transportmitteln, Fortbewegungsmitteln und von Sportgeräten oder Teilen davon, insbesondere von Fahrzeugen zu Wasser oder zu Land oder von Luftfahrzeugen, bevorzugt von Automobilen, Lastkraftwagen, Eisenbahnwagen, Booten, Schiffen, Hubschraubern und Flugzeugen, meist bevorzugt von Wintersportgeräten, insbesondere für den Bobsport.

### Bezugszeichenliste

- 1: Sandwichelement
- 2: Faserwerkstoff
- 3: Kernmaterial/geschäumtes Material
- 4: Werkzeugunterteil
- 5: Werkzeugoberteil
- 6: schäumbares Material
- 7: Heizelemente
- 8: verstärkendes Element

## Patentansprüche

1. Verfahren zur Herstellung eines Sandwichelements umfassend die Schritte
i) Einlegen einer Schicht aus einem Faserwerkstoff in die Kavität des Werkzeugunterteils;
ii) Überdecken der Faserwerkstoffschicht mit einer Schicht eines schäumbaren Materials;
iii) Schliessen des Werkzeugs mit dem Werkzeugoberteil;
iv) Schäumen des schäumbaren Materials;
v) Aushärten des Sandwichelements im Inneren des Werkzeugs;
vi) Öffnen des Werkzeugs und Auswerfen des Sandwichelements.

2. Verfahren gemäss Anspruch 1,
**dadurch gekennzeichnet,**
**dass** nach dem Schritt ii) ein Schritt des Einlegens einer weiteren Schicht aus einem Faserwerkstoff über die Schicht des schäumbaren Materials erfolgt.

3. Verfahren gemäss einem der vorhergehenden Ansprüche,
**dadurch gekennzeichnet,**
**dass** eine beliebige Anzahl von Schichten aus einem Faserwerkstoff und beliebig viele Schichten eines schäumbaren Materials in einem Werkzeugunterteil übereinander gelegt werden.

4. Verfahren gemäss einem der vorhergehenden Ansprüche,
**dadurch gekennzeichnet,**
**dass** das schäumbare Material als Granulat, als Griess, als Pulver, als Schichtkörper, als Paste oder als hochviskose Flüssigkeit in das Werkzeugunterteil gegeben wird.

5. Verfahren gemäss einem der vorhergehenden Ansprüche,
**dadurch gekennzeichnet,**
**dass** der Schritt iv) das Erhöhen der Temperatur des Werkzeugs, insbesondere auf eine Temperatur von 80 bis 150°C, bevorzugt von 90 bis 140°C, umfasst;
**dass** der Schritt v) das weitere Erhöhen der Temperatur des Werkzeugs, insbesondere auf eine Temperatur von 890 bis 220°C, bevorzugt von 130 bis 170°C, umfasst;
wobei sich Schritt v) ein Schritt des Abkühlens des Werkzeugs bis auf Raumtemperatur anschliesst.

6. Verfahren gemäss einem der vorhergehenden Ansprüche,
**dadurch gekennzeichnet,**
**dass** das schäumbare Material thermisch, bei einer Temperatur von ≤ 160 °C, insbesondere von 80 °C bis 150 °C, bevorzugt von 90 °C bis 140 °C, geschäumt wird.

7. Verfahren gemäss einem der vorhergehenden Ansprüche,
**dadurch gekennzeichnet,**
**dass** der Faserwerkstoff mit einer härtenden Klebstoffzusammensetzung versehen ist

8. Verfahren gemäss Anspruch 7,
**dadurch gekennzeichnet,**
**dass** der Schäumungsvorgang des schäumbaren Materials und die Aushärtung der härtenden Klebstoffzusammensetzung unter Druck erfolgen.

9. Verfahren gemäss einem der Ansprüche 7 und 8,
**dadurch gekennzeichnet,**
**dass** die härtende Klebstoffzusammensetzung hitzehärtend ist und bei einer Temperatur von ≥ 130 °C, insbesondere von 140 °C bis 200 °C, bevorzugt von 140 °C bis 180°C, aushärtet.

10. Verfahren gemäss einem der Ansprüche 7 bis 9,
**dadurch gekennzeichnet,**
**dass** die härtende Klebstoffzusammensetzung eine einkomponentige Epoxidharzzusammensetzung ist.

11. Verfahren gemäss einem der vorhergehenden Ansprüche,
**dadurch gekennzeichnet,**
**dass** der Faserwerkstoff ausgewählt ist aus der Gruppe bestehend aus Glasfasern; Kohlefasern; Metallfasern, insbesondere Stahlfasern; Polymerfasern, insbesondere Aramidfasern; und Keramikfasern.

12. Verfahren gemäss einem der vorhergehenden Ansprüche,
**dadurch gekennzeichnet,**
**dass** ein verstärkendes Element in das schäumbare Material eingelegt wird

13. Verfahren gemäss einem der vorhergehenden Ansprüche,
**dadurch gekennzeichnet,**
**dass** das verstärkende Element aus einem Kunststoff oder aus einem Metall, insbesondere aus einem Leichmetall besteht und Hohl- oder Leerräume aufweist.

14. Verfahren gemäss einem der vorhergehenden Ansprüche,
**dadurch gekennzeichnet,**
**dass** das verstärkende Element eine wabenförmige oder eine gitterartige Struktur aufweist.

15. Sandwichelement, welches hergestellt ist nach einem Verfahren gemäss einem der Ansprüche 1 bis 14.

16. Verwendung eines Sandwichelements, welches gemäss einem der Ansprüche 1 bis 14 hergestellt wird,
als strukturelles Leichtbauteil für den Bau von Transport-, Fortbewegungsmitteln und von Sportgeräten oder Teilen davon, insbesondere von Fahrzeugen zu Wasser oder zu Land oder von Luftfahrzeugen, bevorzugt von Automobilen, Lastkraftwagen, Eisenbahnwagen, Booten, Schiffen, Hubschraubern und Flugzeugen.
